# DEMANDE DE BREVET EUROPEEN

(11) **EP 1 459 966 A2**
(43) Date de publication de la demande: **22.09.2004**
(21) Numéro de dépôt: 04290668.5
(22) Date de dépôt: 11.03.2004
(51) Int. Cl.: B62J 6/04

(54) **Contacteur de feu stop pour système de freinage à cable**

(30) Priorité: 17.03.2003 FR 0303232
(71) Demandeur: Jeulin, Yves Michel, 75013 Paris (FR)
(72) Inventeur: Jeulin, Yves Michel, 75013 Paris (FR)

(57) **Abrégé**

Contacteur électrique destiné à être monté sur un ensemble de frein à cable pour cycle ou tout véhicule disposant d'un système de freinage à câble, controlant l'allumage d'un feu stop.

Ce dispositif possède deux demi-coques (1), non fixées sur le cable, équipées chacune d'un contacteur conducteur (2), mobiles l'une par rapport à l'autre par le biais d'un ressort (3) qui, selon le cas, les écarte ou se comprime pour les laisser s'appuyer l'une sur l'autre.

Le contact s'établissant lorsque les deux demi-coques (1) sont appuyées l'une sur l'autre par la compression de l'ensemble du système de freinage lors de l'activation du frein permettant ainsi l'allumage d'un feu stop externe à l'ensemble.

## Description

Comme tout conducteur de véhicule terrestre : motocyclette, automobiles, véhicule utilitaire ou poids-lourd, un conducteur de vélo, ou de tout véhicule à freinage par cable, doit pour sa propre sécurité et la sécurité du trafic, pouvoir signaler automatiquement qu'il freine aux usagers qui le suivent.

La présente invention concerne un dispositif de déclenchement d'un feu stop pour toutes bicyclettes qu'elles soient vtt, vélo tous chemins, tandem ainsi que tous véhicules existants ou à venir dont le freinage repose sur un système de cable.

Ce dispositif se veut simple et sûr. Il fonctionne dès le serrage du système de freinage sur lequel il est monté. Il ne peut, en aucun cas, entraver le fonctionnement du frein car il ne s'oppose jamais au déplacement du câble n'étant pas solidaire de lui.

Le dispositif proposé, à travers lequel passe donc librement le câble, peut être disposé en tout point du système de freinage : soit entre la base fixe de la commande de freinage (poignée ou pédale) et un tronçon de gaine, soit entre deux tronçons de gaine, soit entre un tronçon de gaine et un point fixe du chassis au travers duquel, ou sur lequel, passe le cable, soit entre un tronçon de gaine et la partie terminale du système de freinage qui se déplace sous l'action directe du câble.

Le principe est que la gaine du cable de frein (ou ses tronçons) ne reçoit pas de contrainte lorsque les freins ne sont pas actionnés. Cette gaine a sa rigidité propre et participe pleinement au cheminement du cable en accompagnant celui-ci sur plusieurs secteurs de sa course, généralement lorsque le câble doit négocier des courbes.

Lorsque une effort est fait sur la commande du frein, le cable se déplacant vers l'organe de commande du freinage va, d'une part, tracter avec lui la partie terminale du système de freinage, et d'autre part, comme tout cable tendu, chercher a prendre une ligne droite, chemin le plus court de réponse à une traction.

Ces deux résultantes du déplacement du cable, vont alors, en cascade, mettre en contrainte la gaine (ou ses troncons).

Le contacteur, bien que totalement libre par rapport au cable, subit alors une forte pression par les deux tronçons de gaine qui l'encadrent ou un tronçon de gaine qui le pousse sur un point fixe de chassis au travers duquel passe le câble ou bien encore la partie terminale du systeme de freinage qui s'appui sur le premier tronçon de gaine. Subissant donc une pression de part et d'autre, le dispositif se referme sur lui même et ordonne ainsi avec son mécanisme intérieur le contact électrique allumant le feu stop externe.

Les freins une fois relachés, l'ensemble câble-gaine détendu, le ressort interne du dipositif assure sa ré-ouverture commandant alors l'extinction du feu stop.

Des dispositifs de l'art antérieur sont connus comme le document WO-A-86/00055 qui décrit un dispositif ou les contacts sont disposés sur les machoires de freinage avec tout ce que cela suppose comme difficultés de réglage, de friction circulaire et de risque de non-fonctionnement du à la présence potentielle de boue. Un autre dispositif de l'art antérieur connu par le document FR0003701 montre un contacteur solidaire du cable de freinage et qui pourrait s'opposer au déplacement du cable en cas de mauvais positionnement ou qui verrait sa position reculer par l'intensité de la traction sur le cable et n'être plus en place pour un nouveau fonctionnement.

Les dessins annexés illustrent l'invention :
La figure 1 représente en coupe le dispositif de l'invention.
La figure 2 représente en coupe le dispositif sous pression.
La figure 3 représente les ergots et coulisses de reglage
La figure 4 représente une variante de ce dispositif.

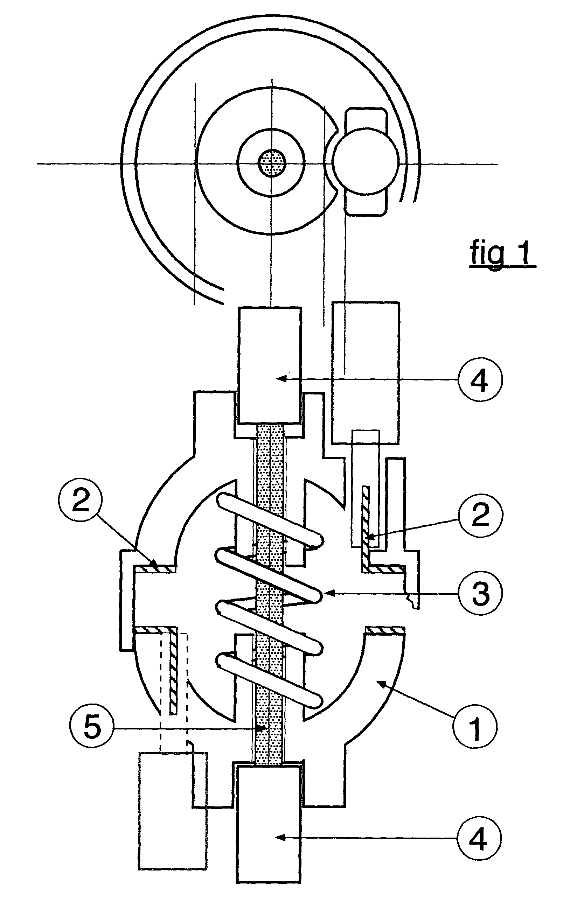

Ce contacteur est composé de deux demi-coques en matériau non conducteur (1), chaque demi-coque dispose d'un contact conducteur de courant (2) avec broche pour la connexion extérieure (6) et un ressort (3) prisonnier entre ces deux demi-coques (fig1).

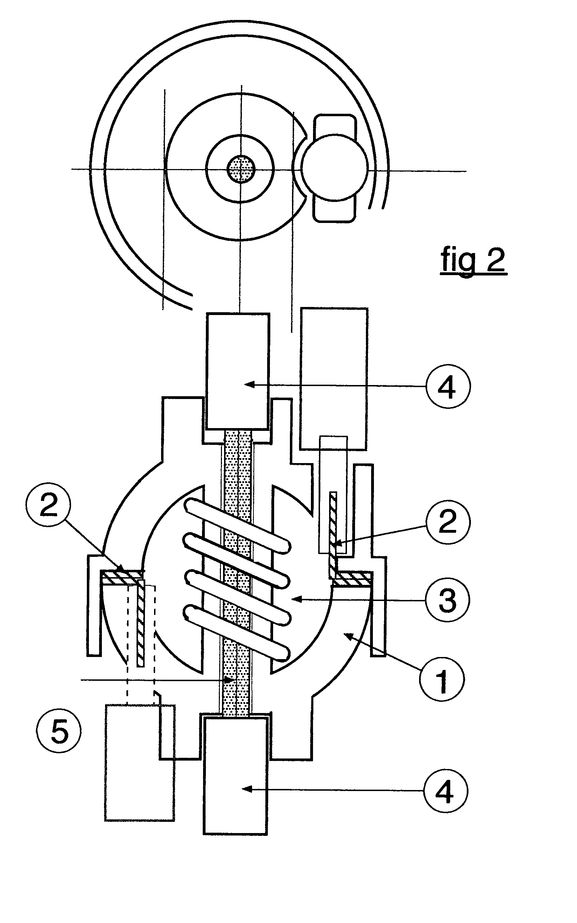

Lorsque le frein est serré, la pression s'exercant sur les deux demi-coques (1) par la globalité du système de freinage via tout accessoire présent sur cette chaine comme par exemple un tronçon de gaine (4), amène celles-ci en contact l'une de l'autre assurant ainsi le passage du courant électrique par le contact des deux contacteurs (2) qui reliés par les deux broches (6) au feu extérieur permet ainsi la circulation du courant dans le contacteur et allume alors le feu stop (fig2).

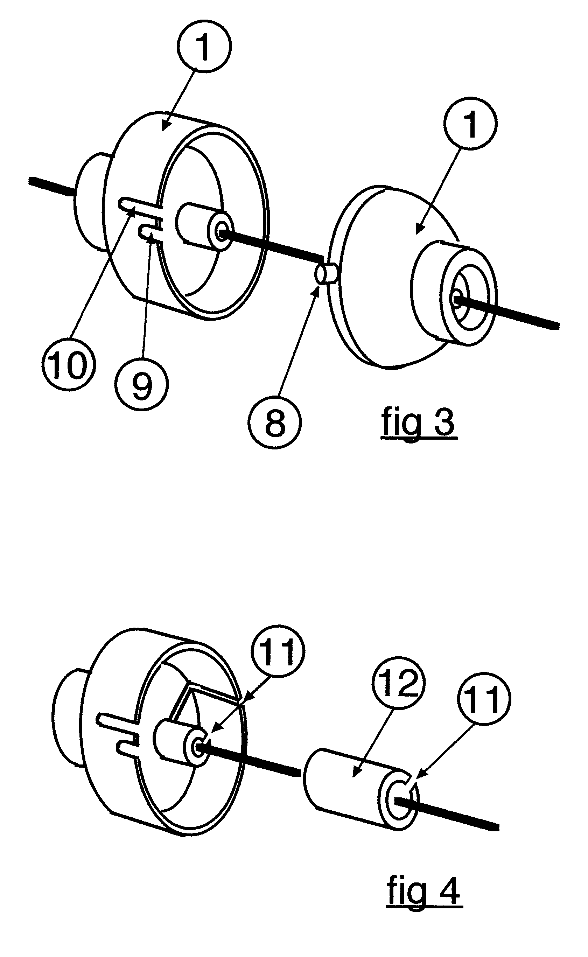

Ces deux demi-coques (1), dont l'une assure l'étanchéité de l'ensemble par une jupe (7) recouvrant le déplacement total de l'une dans l'autre, comprennent un ensemble - ergot/position de blocage ou de coulissement (8) - assurant l'écartement des deux demi-coques lors du serrage industriel de l'ensemble du système de freinage par un logement d'ergot court (9) ou laissant fonctionner l'ensemble en usage courant par une coulisse longue (10) selon le choix de l'operateur installant l'ensemble (fig3).

Ce système possède une variante : alors que la figure 1 montre un dispositif qui s'enfile "comme une perle" on peut avoir sur la même revendication de brevet deux demi-coques qui se clipsent sur le cable grâce à une "boutonniere" (11), le ressort étant remplacé par tout dispositif souple de rappel fendu sur toute sa longueur (12), par exemple : un tube de caoutchouc ... (fig4)

## Revendications

1. Dispositif de déclenchement d'un feu stop pour toutes bicyclettes, ainsi que tous véhicules dont le freinage repose sur un système à câble **caractérisé en ce que** le câble de frein (5) passe librement à travers ledit dispositif, celui-ci étant constitué :
- De deux demi-coques (1) en matériau non-conducteur, comportant un contact conducteur de courant, disposées entre deux tronçons de gaine (4) ou entre un tronçon de gaine (4) et un point fixe du châssis.
- Et d'un ressort (3) prisonnier entre les deux demi-coques (1)

2. Dispositif selon la revendication 1, **caractérisé en ce qu'**il n'est pas solidarisé mécaniquement avec un quelquonque des autres sous-ensembles du système de freinage et qu'il ne fonctionne que conjointement à ceux-ci dans le cadre du processus global de tension du système lors de l'action sur le frein.

3. Dispositif selon la revendication 2, **caractérisé en ce que** lorsque le frein est serré, les deux demi-coques (1) subissent une force de compression par les deux tronçons de gaine (4) ou par un tronçon de gaine (4) et un point fixe du chassis, permettant au dispositif de se refermer et d'assurer le passage du courant électrique par le contact des deux contacteurs (2) reliés par les deux broches (6) au feu extérieur, autorisant l'allumage du dit feu stop extérieur.

4. Dispositif selon la revendication 3 **caractérisé en ce qu'**il peut être introduit sur l'ensemble de freinage soit de facon axiale soit latérale comme décrit dans la figure 4.

5. Dispositif selon la revendication 4 **caractérisé en ce qu'**un système d'ergots (8) et de coulisses courtes (9) ou longues (10) permet le réglage de l'ensemble lors de sa mise en service.

6. Dispositif selon la revendication 5 **caractérisé en ce que** les connexions électriques disposent de trous de sortie du dudit dispositif propres qui mettent les fils a l'abris de toute friction et arrachement lors de l'effort mécanique de l'ensemble contacteur/gaine ou point fixe.
